# EUROPÄISCHE PATENTANMELDUNG

(11) **EP 4 391 271 A2**
(43) Veröffentlichungstag der Anmeldung: **26.06.2024**
(21) Anmeldenummer: 23214342.0
(22) Anmeldetag: 05.12.2023
(51) Int. Cl.: H02J 3/24, H02J 3/32, H02J 3/40

(54) **BEREITSTELLUNG VON PRIMÄRER REGELLEISTUNG AUS EINEM BATTERIESPEICHER KOMBINIERT MIT MINDESTENS EINEM KRAFTWERK**

(30) Priorität: 08.12.2022 DE 102022132666
(71) Anmelder: RWE Supply & Trading GmbH, 45141 Essen (DE)
(72) Erfinder: Spiecker, Dr. Stephan, 45141 Essen (DE); Schwarz, Dr. Hans-Günter, 45141 Essen (DE); Wannenwetsch, Dr. Jens, 45141 Essen (DE)
(74) Vertreter: Schwenderling, Jens

(57) **Zusammenfassung**

Ein Kombinationskraftwerk 1 umfassend mindestens einen Batteriespeicher 2 und mindestens ein Kraftwerk wie beispielsweise ein Pumpspeicherkraftwerk 3 stellt grundsätzlich primäre Regelleistung 9 aus dem Batteriespeicher 2 bereit. Unterschreitet der Ladezustand 13 des Batteriespeichers 2 die untere Triggerschwelle 14, so wird die Leistungsbereitstellung 15 des Pumpspeicherkraftwerks 3 erhöht, dieses wird angefahren, um entsprechend Leistung als primäre Regelleistung 9 bereitzustellen, wenn sich der Ladezustand 13 des Batteriespeichers 2 unterhalb der unteren Triggerschwelle 14 in Richtung null bewegt. Analog lässt sich eine obere Triggerschwelle 12 des Batteriespeichers 2 realisieren.

## Beschreibung

Gegenstand der vorliegenden Erfindung ist ein Verfahren zum Bereitstellen von Regelleistung, insbesondere primärer Regelleistung, für ein Wechselspannungsnetz zur Frequenzregelung. Die Regelleistung wird aus einem Kombinationskraftwerk umfassend einen Batteriespeicher und mindestens einem Kraftwerk bereitgestellt.

Über Wechselspannungsnetze werden Verbraucher wie insbesondere Privathaushalte oder industrielle Stromverbraucher mit Stromerzeugern wie fossilen Kraftwerken, Windstromanlagen oder Solarstromanlagen verbunden. Hierbei weist das Wechselspannungsnetz eine Sollfrequenz auf, die einzuhalten ist. Zu Abweichungen von der Sollfrequenz kann es kommen, wenn das von den Stromerzeugern bereitgestellte Leistungsangebot nicht dem von den Verbrauchern abgenommenem Stromverbrauch entspricht. Um die Stabilität des Netzes über eine Stabilisierung der Frequenz des Wechselspannungsnetzes bei der Sollfrequenz zu gewährleisten, stellen damit beauftragte Kraftwerksbetreiber und gegebenenfalls Stromverbraucher Regelleistung zur Verfügung, mit der die Frequenz des Wechselspannungsnetzes beeinflussbar ist, so dass eine Regelung der Frequenz des Wechselspannungsnetzes auf die Sollfrequenz erfolgen kann.

Batteriespeicher sind aufgrund ihrer guten Regelfähigkeit (auch aus dem Nullpunkt heraus) gut für flexible Einsätze wie der Erbringungen der so genannten primären Regelleistung (die auch als FCR, Frequency Containment Reserve bezeichnet wird) geeignet. Bei der FCR muss im Europäischen Verbundnetz nach der momentan geltenden Regelung beim Abweichen der Frequenz des Wechselspannungsnetzes von der Sollfrequenz eine Reaktion innerhalb von zwei Sekunden oder spätestens innerhalb von 15 Sekunden erfolgen und die volle Leistung muss 30 Sekunden nach Abruf verfügbar sein. Gleichzeitig muss sichergestellt sein, dass die Erbringung über einen Zeitraum von 15 Minuten (und das sowohl für positive primäre Regelleistung als auch für negative primäre Regelleistung) durch die Anlage erfolgen kann. Hierfür ist für den Batteriespeicher ein entsprechendes Nachlademanagement und eine entsprechende Ausstattung mit Speicherkapazität vorzusehen. Bei der Auslegung der Speicherkapazität ist zum einen die Alterung der Zellen und damit einhergehend ein Rückgang der Speicherkapazität zu berücksichtigen und zum anderen potentielle Änderungen beim geforderten Sicherheitsniveau, d.h. wie lange muss der Batteriespeicher in der Lage sein, seine Leistung zu erbringen, bevor er an eine vorgebbare obere oder untere Grenze des Ladezustands stößt.

Hiervon ausgehend liegt der vorliegenden Erfindung die Aufgabe zugrunde, die aus dem Stand der Technik bekannten Nachteile insbesondere hinsichtlich der Kapazitätsanforderungen zumindest teilweise zu überwinden.

Die Aufgabe wird gelöst mit den Merkmalen des unabhängigen Anspruchs. Die abhängigen Ansprüche sind auf vorteilhafte Weiterbildungen gerichtet.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Das erfindungsgemäße Verfahren zum Bereitstellen einer Regelleistung, insbesondere einer primären Regelleistung, zum Regeln der Frequenz in einem Wechselspannungsnetz mit einer Sollfrequenz, bei dem die primäre Regelleistung aus einem Kombinationskraftwerk bereitgestellt wird, welches einen Batteriespeicher und mindestens ein Kraftwerk umfasst, bei dem für den Ladezustand des Batteriespeichers eine untere Triggerschwelle festgelegt ist, umfasst die folgenden Schritte:
a) Bestimmen einer Frequenzabweichung durch Bildung einer Differenz zwischen der Frequenz und der Sollfrequenz des Wechselspannungsnetzes;
b) Bestimmung des Ladezustandes des Batteriespeichers und Vergleich des Ladezustandes mit der unteren Triggerschwelle;
c) Bereitstellen der sich aus der Frequenzabweichung ergebenden primären Regelleistung,
wobei in Schritt c) die Regelleistung grundsätzlich aus dem Batteriespeicher zur Verfügung gestellt wird, wobei wenn der Ladezustand des Batteriespeichers zu einem unteren Triggerzeitpunkt unter die untere Triggerschwelle fällt eine Leistungsbereitstellung mindestens eines Kraftwerks initiiert wird, wobei die Leistungsbereitstellung des Batteriespeichers entsprechend der Leistungsbereitstellung des mindestens einen Kraftwerks reduziert wird.

Als Wechselspannungsnetz wird hier insbesondere ein Spannungsnetz verstanden, welches zur Versorgung von Verbrauchern wie insbesondere industriellen Stromverbrauchern und Privathaushalten dient. Insbesondere handelt es sich bei dem Wechselspannungsnetz um ein Energieversorgernetz mit einer oder mehreren Spannungsebenen, welches der Versorgung von Kundenanlagen mit elektrischer Energie dient, die beispielweise aus fossilen Kraftwerken, Laufwasserkraftwerken, Pumpspeicherkraftwerken, Photovoltaikanlagen, Windenergieanlagen und/oder Batteriespeichern bereitgestellt wird. Das Wechselspannungsnetz wird mit einer Sollfrequenz betrieben, die beispielsweise in Westeuropa 50 Hz [Hertz] und in Nordamerika 60 Hz beträgt.

Die Frequenz des Wechselspannungsnetzes weicht von der Sollfrequenz ab, wenn die in das Wechselspannungsnetz eingespeiste physikalische Leistung nicht der dem Wechselspannungsnetz entnommenen physikalischen Leistung entspricht. Um hier die Frequenz hin zur Sollfrequenz zu regeln, wird Regelleistung in das Wechselspannungsnetz abgegeben oder diesem entnommen. Liegt die Frequenz des Wechselspannungsnetzes unterhalb der Sollfrequenz so liegt eine Unterfrequenz vor, die eine Abgabe einer Regelleistung in das Wechselspannungsnetz notwendig macht. In diesem Falle ist die Regelleistung positiv. Liegt die Frequenz des Wechselspannungsnetzes oberhalb der Sollfrequenz liegt eine Überfrequenz vor, die eine Aufnahme von Leistung aus dem oder eine Reduktion der Abgabe von Leistung in das Wechselspannungsnetz erfordert. In diesem Falle ist die Regelleistung negativ.

Grundsätzlich wird heute insbesondere im kontinentaleuropäischen Verbundnetz (bei den Mitgliedern der ENTSO-E, European association for the cooperation of transmission system operators for electricity) bei der Frequenzregelung zwischen primärer Regelleistung oder Primärregelleistung (auch FCR, Frequency Containment Reserve), sekundärer Regelleistung oder Sekundärregelleistung (auch automatic Frequency Restoration Reserve, aFRR) und tertiärer Regelleistung, Tertiärregelleistung oder Minutenreserve unterschieden. Die Bereitstellung dieser Regelleistungen dient dazu, Ungleichgewichte zwischen physikalischem Leistungsangebot und physikalischer Leistungsnachfrage auszugleichen. Primärregelung und die dabei abgegebene beziehungsweise aufgenommene primäre Regelleistung einerseits und die Sekundärregelung und die abgegebene beziehungsweise aufgenommene sekundäre Regelleistung unterscheiden sich in Bezug auf die Schnelligkeit bei der Bereitstellung. So muss bei einer Frequenzabweichung von +/- 200 mHz [Millihertz] innerhalb von 30 Sekunden die primäre Regelleistung bereitstellbar, also abgebbar oder aufnehmbar, sein, während die sekundäre Regelleistung innerhalb von höchstens 5 Minuten erbringbar sein muss. Die Minutenreserve dient zur Unterstützung und Entlastung der Sekundärregelleistung. Der Unterschied zwischen Primärregelung und Sekundärregelung liegt zunächst also in der Zeitskala der Bereitstellung. Darüber hinaus erfolgt die Erbringung der Primärregelleistung basierend auf der lokal gemessenen Frequenzabweichung und muss grundsätzlich zumindest für eine bestimmte Dauer erbringbar sein. Bei der sekundären Regelleistung gibt es hingegen keine zeitliche Beschränkung der Erbringung und der Vorgabewert wird zentral vom Übertragungsnetzbetreiber durch ein Regelsignal vorgegeben.

Im Rahmen des erfindungsgemäßen Verfahrens wird Regelleistung, insbesondere primäre Regelleistung, zur Verfügung gestellt. Hierbei wird ein Kombinationskraftwerk zur Bereitstellung der Regelleistung eingesetzt. Unter Bereitstellung wird im Rahmen dieses Dokumentes sowohl das Abgeben von Regelleistung in das Wechselspannungsnetz als auch das Aufnehmen von Regelleistung aus dem Wechselspannungsnetz verstanden. Unter dem Aufnehmen von Regelleistung aus dem Wechselspannungsnetz wird auch die Reduktion von in das Wechselspannungsnetz abgegebener Leistung verstanden. Unter dem Ladezustand wird die Menge an elektrischer Energie verstanden, die im Batteriespeicher gespeichert ist. Der Ladezustand ist zeitabhängig und kann durch Laden des Batteriespeichers ansteigen und durch Entladen des Batteriespeichers absinken.

Unter einem Kraftwerk wird ein beliebiges Kraftwerk verstanden, welches elektrische Energie dem Wechselspannungsnetz zur Verfügung stellen kann. Unter einem Kraftwerk wird insbesondere ein fossil befeuertes Kraftwerk insbesondere ein Kohlekraftwerk, ein Nuklearkraftwerk, ein Gaskraftwerk, ein Pumpspeicherkraftwerk, ein Laufwasserkraftwerk, mindestens eine Windkraftanlage oder ähnliches verstanden. Unter einem Pumpspeicherkraftwerk wird ein Kraftwerk verstanden, das elektrische Energie in Form von potentieller Energie in einem Stausee speichert. Das Wasser wird durch Pumpen in den Speicher gehoben, um später wieder für den Antrieb mindestens einer Turbine zur Stromerzeugung benutzt werden zu können.

Der Batteriespeicher ist aus Sekundärbatterien aufgebaut. Energie kann daher im Batteriespeicher gespeichert oder diesem entnommen werden. Der Batteriespeicher ist für die Bereitstellung der Regelleistung in einem Energieversorgungsnetz ausgelegt und bestimmt und weist insbesondere Leistungen von mindestens mehreren Megawatt [MW] und Kapazitäten von mindestens mehreren Megawattstunden [MWh] auf. Unter der Reduktion der Leistungsbereitstellung des Batteriespeichers entsprechend der Leistungsbereitstellung des mindestens einen Kraftwerks wird verstanden, dass bei einer konstanten Leistungsbereitstellung aus dem Kombinationskraftwerk die Summe der Leistungsbereitstellung des Batteriespeichers und der Leistungsbereitstellung des mindestens einen Kraftwerks des Kombinationskraftwerks konstant ist und insbesondere der abgegebenen Regelleistung entspricht.

In Schritt a) erfolgt eine Messung der Frequenz des Wechselspannungsnetzes und/oder ein Rückgriff auf eine bereits bekannte Frequenz des Wechselspannungsnetzes. Das hier beschriebene Verfahren beruht darauf, dass grundsätzlich die primäre Regelleistung aus dem Batteriespeicher zur Verfügung gestellt wird, jedoch der Ladezustand des Batteriespeichers grundsätzlich überwacht wird, um zu verhindern, dass die Bereitstellung der primären Regelleistung abbricht, wenn der Batteriespeicher vollständig entladen ist. Unterschreitet der Ladezustand des Batteriespeichers die unterste Triggerschwelle, so wird das Kraftwerk angefahren. Bevorzugt ist die untere Triggerschwelle so gewählt, dass die verbleibende Batterieladung im Batteriespeicher ausreicht, die Regelleistung zur Verfügung zu stellen, bis das Kraftwerk die maximale für die Regelleistung vorgesehene Leistung erreicht hat.

Bevorzugt weist der Batteriespeicher eine Abgabeleistung auf, wobei die Abgabeleistung die Leistung ist, die aus dem Batteriespeicher maximal für die Bereitstellung der primären Regelleistung zur Verfügung steht, wobei die untere Triggerschwelle so festgelegt wird, dass der Batteriespeicher bei Erreichen der unteren Triggerschwelle noch einen genügend hohen Ladezustand aufweist, dass ab dem unteren Triggerzeitpunkt bis zur Abgabe der Abgabeleistung durch das mindestens eine Kraftwerk der Batteriespeicher noch die Abgabeleistung abgeben kann. Diese bevorzugte Festlegung der unteren Triggerschwelle stellt sicher, dass das Kraftwerk so rechtzeitig angefahren wird, dass der restliche Ladezustand des Batteriespeichers die Abgabe der höchsten für die Bereitstellung der primären Regelleistung zur Verfügung stehenden Leistung, also der Abgabeleistung, ausreicht, selbst wenn durch die angefragte primäre Regelleistung die aktuelle Leistungsbereitstellung des Batteriespeichers unterhalb der Abgabeleistung liegt. Dies erlaubt es, dass selbst wenn die angefragte primäre Regelleistung erst nach dem unteren Triggerzeitpunkt die Abgabeleistung erreicht, das Kombinationskraftwerk diese primäre Regelleistung zuverlässig bereitstellen kann.

Bevorzugt sind der Batteriespeicher und das mindestens eine Kraftwerk über unterschiedliche Netzanschlusspunkte mit dem Wechselspannungsnetz verbunden. Dies erlaubt die Zusammenfassung von Einheiten an verschiedenen Standorten zu einer Reservegruppe zur gemeinsamen Bereitstellung von Regelleistung. Alternativ sind der Batteriespeicher und das mindestens eine Kraftwerk über denselben Netzanschlusspunkt mit dem Wechselspannungsnetz verbunden. So kann einem Kraftwerk lokal ein Batteriespeicher zur Bildung einer Reservegruppe zur gemeinsamen Bereitstellung von Regelleistung hinzugefügt werden.

Bevorzugt weist der Batteriespeicher eine Abgabeleistung auf, wobei die maximale durch das Kraftwerk abgebbare Leistung mindestens der Abgabeleistung des Batteriespeichers entspricht. Dies stellt sicher, dass sowohl der Batteriespeicher als auch das mindestens eine Kraftwerk die Abgabe der Abgabeleistung als primäre Regelleistung sicherstellen können. So kann, falls der Batteriespeicher den Ladezustand null erreicht, also vollständig entladen ist, das Kraftwerk die Abgabe der entsprechenden Regelleistung sicherstellen.

Bevorzugt wird für den Ladezustand des Batteriespeichers eine obere Triggerschwelle festgelegt und in Schritt b) weiterhin ein Vergleich des Ladezustandes des Batteriespeichers mit der oberen Triggerschwelle erfolgt und, wenn der Ladezustand des Batteriespeichers die obere Triggerschwelle zu einem oberen Triggerzeitpunkt übersteigt, eine Reduktion einer Leistungsbereitstellung mindestens eines Kraftwerks initiiert, wobei die Leistungsbereitstellung des Batteriespeichers entsprechend der Reduktion der Leistungsbereitstellung des mindestens einen Kraftwerks erhöht wird. Das Kraftwerk, dessen Leistungsbereitstellung reduziert wird, kann identisch zu dem Kraftwerk sein, dessen Leistungsbereitstellung im Falle einer positiven Regelleistung erhöht wird. Im Falle einer Überfrequenz wird bevorzugt die zu große im Wechselspannungsnetz vorhandene Leistung zur Aufladung des Batteriespeichers genutzt und dadurch entsprechend negative primäre Regelleistung bereitgestellt. Eine Aufladung des Batteriespeichers funktioniert nicht mehr, wenn der Ladezustand die Kapazität des Batteriespeichers erreicht hat, der Batteriespeicher also vollständig geladen ist. Die hier beschriebene bevorzugte Ausgestaltung ermöglicht also, dass statt durch die weitere Aufladung des Batteriespeichers eine negative Regelleistung durch mindestens ein Kraftwerk insbesondere eine Windkraftanlage (oder mehrere Windkraftanlagen in einem Windpark) bereitgestellt werden kann. Die obere Triggerschwelle ermöglicht so die Änderung der Bereitstellung von negativer Regelleistung von dem Batteriespeicher auf das Kraftwerk, wenn sich der Ladezustand des Batteriespeichers der Kapazität des Batteriespeichers annähert. Unter einer Erhöhung der Leistungsbereitstellung des Batteriespeichers entsprechend der Reduktion der Leistungsbereitstellung des mindestens einen Kraftwerks wird bevorzugt verstanden, dass für eine gegebene konstante Leistungsbereitstellung die Summe der Leistungsbereitstellung des mindestens einen Kraftwerks und der Leistungsbereitstellung des Batteriespeichers konstant ist.

Bevorzugt weist der Batteriespeicher eine Kapazität und eine Abgabeleistung auf, wobei die Abgabeleistung die Leistung ist, die aus dem Batteriespeicher maximal für die Bereitstellung der Regelleistung zur Verfügung steht, wobei die obere Triggerschwelle so festgelegt wird, dass die Differenz zwischen einer Kapazität des Batteriespeichers und der oberen Triggerschwelle ausreicht, um die erhöhte Leistungsbereitstellung des Batteriespeichers ausgehend von einer Situation, in der die Leistungsbereitstellung des Batteriespeichers beim oberen Triggerzeitpunkt bei der negativen Abgabeleistung liegt, bis zu einer Situation, bei der in Abhängigkeit von der Reduktion der Leistungsbereitstellung des mindestens einen Kraftwerks die Leistungsbereitstellung des Batteriespeichers null erreicht, noch im Batteriespeicher zu speichern ist. Dies stellt sicher, dass selbst im Extremfall, in dem die negative Abgabeleistung im Batteriespeicher zur Ladung des Batteriespeichers aufgenommen wird, der mögliche Leistungsabfall des mindestens einen Kraftwerks pro Zeiteinheit eine Reduktion der Leistungsabgabe des mindestens einen Kraftwerks in einem Maße und innerhalb einer Zeitspanne ermöglicht, bei der der Ladezustand des Batteriespeichers maximal die Kapazität des Batteriespeichers erreicht.

Bevorzugt sind mehrere kleinere Anlagen wie Windkraftanlagen zu einem Windpark oder Photovoltaikanlagen zu einem Photovoltaikpark zusammengefasst. Dieser erleichtert die Reduktion der bereitgestellten Leistung, da die notwendige Reduktion auf mehrere kleinere Anlagen verteilt werden kann.

Bevorzugt ist der Batteriespeicher über einen Netzanschlusspunkt mit dem Wechselspannungsnetz verbunden und in Schritt a) wird die Frequenz des Wechselspannungsnetzwerks am Netzanschlusspunkt des Batteriespeichers bestimmt. Zusätzlich wird bevorzugt die Frequenz des Wechselspannungsnetzes an den Standorten aller Kraftwerke des Kombinationskraftwerks gemessen, um im Falle einer Netztrennung systemschädliches Verhalten zu vermeiden. Bevorzugt gibt ein Kraftwerk eine positive Leistung für die Bereitstellung von Regelleistung an das Wechselspannungsnetz nur ab, wenn der Ladezustand der Batterie die untere Triggerschwelle unterschreitet und gleichzeitig die Frequenz des Wechselspannungsnetzes am Standort beziehungsweise am Netzanschlusspunkt des Kraftwerks des Kombinationskraftwerks unterhalb von 50 Hz liegt. Sind nicht beide Voraussetzungen erfüllt, kommt es zu keiner Leistungsanpassung. Entsprechendes gilt für den Fall einer negativen Regelleistung. Ein Kraftwerk führt eine negative Regelleistung bevorzugt nur dann dem Wechselspannungsnetz zu, wenn der Ladezustand der Batterie die obere Triggerschwelle überschreitet und gleichzeitig die Frequenz des Wechselspannungsnetzes am Standort des Kraftwerks oberhalb von 50 Hz liegt.

Bevorzugt wird, nachdem die Leistungsbereitstellung des Kraftwerks bei Unterschreiten einer ersten unteren Triggerschwelle initiiert wurde, die Leistungsbereitstellung des Kraftwerks beendet, wenn der Ladezustand des Batteriespeichers eine zweite untere Triggerschwelle überschreitet, wobei sich die erste untere Triggerschwelle von der zweiten unteren Triggerschwelle unterscheidet. Bevorzugt ist die erste untere Triggerschwelle kleiner als die zweite untere Triggerschwelle. Durch unterschiedliche erste und zweite untere Triggerschwellen werden regelmäßige Leistungsanpassungen des Kraftwerks vermieden, wenn beispielweise der Ladezustand - gegebenenfalls durch eine fluktuierende angeforderte Regelleistung - um die erste untere Triggerschwelle schwankt.

Bevorzugt wird, nachdem die Reduktion der Leistungsbereitstellung des Kraftwerks bei Überschreiten einer ersten oberen Triggerschwelle initiiert wurde, die Leistungsbereitstellung des Kraftwerks erhöht, wenn der Ladezustand des Batteriespeichers unter eine zweite obere Triggerschwelle fällt, wobei sich die erste obere Triggerschwelle von der zweiten oberen Triggerschwelle unterscheidet. Bevorzugt ist die zweite obere Triggerschwelle kleiner als die erste obere Triggerschwelle. Durch unterschiedliche erste und zweite obere Triggerschwellen werden regelmäßige Leistungsanpassungen des Kraftwerks vermieden, wenn beispielweise der Ladezustand - gegebenenfalls durch eine fluktuierende angeforderte Regelleistung - um die erste obere Triggerschwelle schwankt. Bevorzugt wird das Vorzeichen der Differenz einer lokal gemessenen Frequenz des Wechselspannungsnetzes und der Sollfrequenz überwacht, um schädliches Verhalten bei einem Systemsplit auszuschließen. Insbesondere wird hierfür ein unterer Grenzwert der Frequenzabweichung vorgegeben, beispielsweise von 50 mHz [Millihertz],

Soll eine positive Regelleistung aus einem Kraftwerk wie beispielsweise einem Pumpspeicherkraftwerk bereitgestellt werden, so wird, sofern der Betrag der Differenz zwischen der gemessenen Frequenz des Wechselspannungsnetzes und der Sollfrequenz oberhalb des unteren Grenzwertes liegt, das Vorzeichen der Differenz der lokal an diesem Kraftwerk gemessenen Frequenz des Wechselspannungsnetzes von der Sollfrequenz nicht überwacht beziehungsweise es erfolgt keine Regelung auf die Frequenzabweichung, unabhängig davon, ob der Ladezustand oberhalb oder unterhalb der (ersten oder zweiten) unteren Triggerschwelle liegt. Liegt jedoch der Betrag der Differenz zwischen der gemessenen Frequenz des Wechselspannungsnetzes und der Sollfrequenz unterhalb des unteren Grenzwertes, so wird dann, wenn der Ladezustand unterhalb der (ersten oder zweiten) unteren Triggerschwelle liegt, das Vorzeichen der Differenz der lokal an diesem Kraftwerk gemessenen Frequenz des Wechselspannungsnetzes von der Sollfrequenz überwacht, nicht jedoch, wenn der Ladezustand des Batteriespeichers oberhalb einer unteren Triggerschwelle liegt.

Soll eine negative Regelleistung aus einem Kraftwerk wie beispielsweise einem Windpark oder mindestens einer Windkraftanlage bereitgestellt werden, so wird, sofern der Betrag der Differenz zwischen der gemessenen Frequenz des Wechselspannungsnetzes und der Sollfrequenz oberhalb des unteren Grenzwertes liegt, das Vorzeichen der Differenz der lokal an diesem Kraftwerk gemessenen Frequenz des Wechselspannungsnetzes von der Sollfrequenz überwacht, wenn der Ladezustand des Batteriespeichers oberhalb einer (ersten oder zweiten) oberen Triggerschwelle liegt, nicht jedoch, wenn der Ladezustand oberhalb der (ersten oder zweiten) oberen Triggerschwelle liegt. Liegt der Betrag der Differenz zwischen der gemessenen Frequenz des Wechselspannungsnetzes und der Sollfrequenz unterhalb des unteren Grenzwertes, so wird das Vorzeichen der Differenz der lokal an diesem Kraftwerk gemessenen Frequenz des Wechselspannungsnetzes von der Sollfrequenz nicht überwacht, unabhängig davon, ob der Ladezustand oberhalb oder unterhalb der (ersten oder zweiten) oberen Triggerschwelle liegt.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1: schematisch eine Darstellung ein Beispiel eines Kombinationskraftwerks;
- Fig. 2: ein Beispiel einer Bereitstellung einer primären Regelleistung, wenn der Ladezustand des Batteriespeichers in der Nähe einer oberen Triggerschwelle liegt;
- Fig. 3: ein Beispiel einer Bereitstellung einer primären Regelleistung, wenn der Ladezustand des Batteriespeichers in der Nähe einer unteren Triggerschwelle liegt;
- Fig. 4: ein Beispiel asymmetrischer oberer Triggerschwellen beim Einsatzbeginn bei Bereitstellung negativer primärer Regelleistung;
- Fig. 5: ein Beispiel asymmetrischer oberer Triggerschwellen beim Einsatzende bei Bereitstellung negativer primärer Regelleistung;
- Fig. 6: ein Beispiel asymmetrischer oberer Triggerschwellen beim Einsatzbeginn bei Bereitstellung positiver primärer Regelleistung; und
- Fig. 7: ein Beispiel asymmetrischer oberer Triggerschwellen beim Einsatzende bei Bereitstellung positiver primärer Regelleistung.

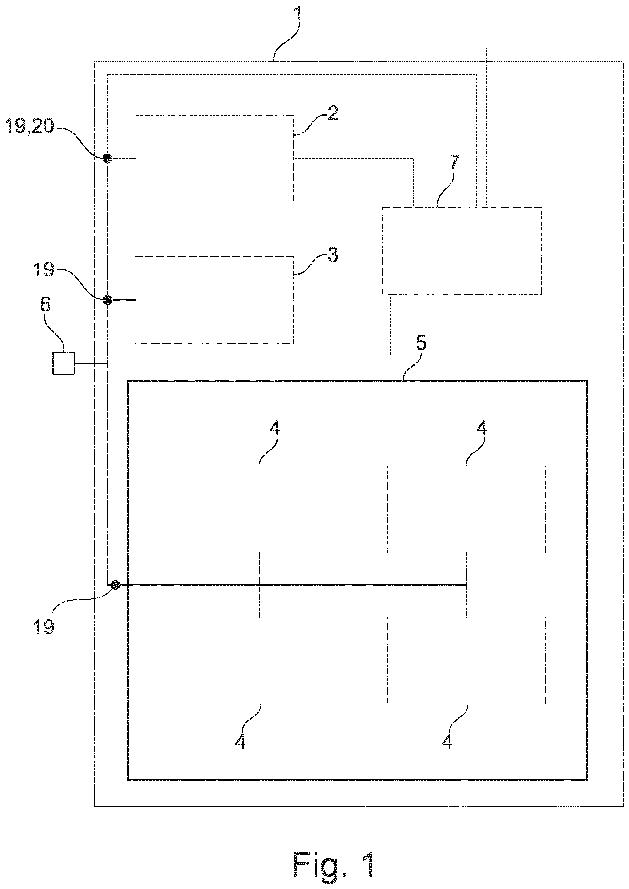

Fig. 1 zeigt sehr schematisch ein Beispiel eines Kombinationskraftwerk 1. Dieses umfasst einen Batteriespeicher 2, mindestens ein Pumpspeicherkraftwerk 3 und mindestens eine Windkraftanlage 4. Mehrere Windkraftanlagen 4 können zu einem Windpark 5 zusammengefasst werden. Alternativ oder zusätzlich können auch statt eines Pumpspeicherkraftwerks 3 und/oder mindestens einer Windkraftanlage 4 oder zusätzlich zu diesen ein oder mehrere andere Kraftwerke wie fossil befeuerte Kraftwerke, Nuklearkraftwerke, Gaskrpaftwerke, Gas- und Dampfkraftwerke und/oder Photovoltaikanlagen ausgebildet sein.

Der Batteriespeicher 2, das Pumpspeicherkraftwerk 3 und die Windkraftanlagen 4 des Windparks 5 sind mit einem Wechselspannungsnetz 6 verbindbar. Über eine Steuereinrichtung 7 ist die Leistungsabgabe des Batteriespeichers 2, des Pumpspeicherkraftwerkers 3 und der Windkraftanlagen 4 des Windparks 5 zur Bereitstellung einer Regelleistung zur Regelung einer Frequenz des Wechselspannungsnetzes 6 hin zu einer Sollfrequenz regelbar. Die hier bereitgestellte Regelleistung ist insbesondere eine primäre Regelleistung und/oder eine Regelleistung, deren Bereitstellung auf einer Zeitskala von wenigen Sekunden beginnen muss und die vollständig nach maximal wenigen 10 Sekunden, insbesondere 30 Sekunden, bereitgestellt sein muss.

Unter einer Bereitstellung einer Regelleistung wird im Rahmen dieses Dokumentes sowohl die Einbringung einer positiven Regelleistung in das Wechselspannungsnetz 6 im Falle einer Unterfrequenz als auch das Aufnehmen von Regelleistung aus dem Wechselspannungsnetz 6 und/oder die Reduktion der Leistungseinbringung in das Wechselspannungsnetz 6 im Falle einer Überfrequenz verstanden. Die Steuereinrichtung 7 ist entsprechend mit dem Batteriespeicher 2, dem Pumpspeicherkraftwerk 3 und dem Windpark 5 verbunden. Gleichzeitig ist die Steuereinrichtung 7 mit dem Wechselspannungsnetz 6 verbunden, um lokal die Frequenz des Wechselspannungsnetzes 6 und damit die Frequenzabweichung von der Sollfrequenz des Wechselspannungsnetzes 6 zu bestimmen.

Batteriespeicher 2, Pumpspeicherkraftwerk 3 und Windpark 5 sind jeweils über einen Netzanschlusspunkt 19 mit dem Wechselspannungsnetz 6 verbunden, so dass Batteriespeicher 2, Pumpspeicherkraftwerk 3 und/oder Windpark 5 an einem oder mehreren Standorten lokalisiert sein können. Bevorzugt weist der Batteriespeicher 2 einen Netzanschlusspunkt 20 auf, an dem die Frequenz des Wechselspannungsnetzes 6 gemessen und an die Steuereinrichtung 7 übermittelt wird. Auch bei dem mindestens einen Kraftwerk des Kombinationskraftwerks 1, hier also dem Pumpspeicherkraftwerk 3 und dem Windpark 5, wird die Frequenz dezentral gemessen. Solange keine Trennung der Datenverbindung zwischen den Komponenten des Kombinationskraftwerks 1erfolgt, also die Datenverbindung zwischen Pumpspeicherkraftwerk 3, Windpark 5 und/oder Batteriespeicher 2 getrennt wird, erfolgt die Regelung über die Messung der Frequenz des Wechselspannungsnetzes 6 am Batteriespeicher 2. Im Falle einer Unterbrechung dieser Datenverbindung fangen dezentralen Steuerungsgeräte am Ort des Pumpspeicherkraftwerks 3, des Windparks 5 und/oder des Batteriespeichers 2 netzschädliches Verhalten ab.

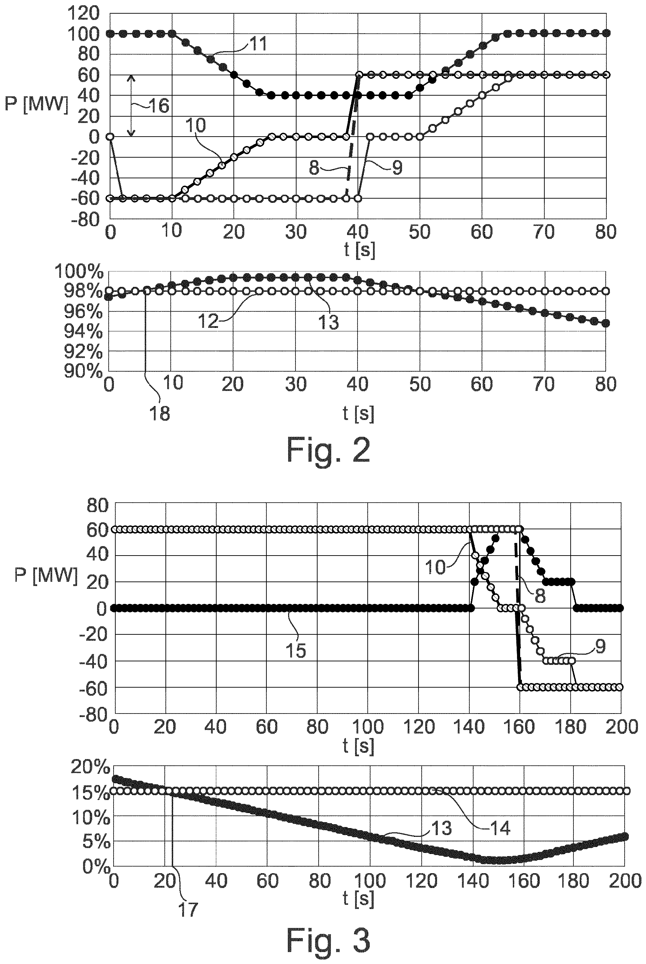

Fig. 2 zeigt ein Beispiel einer Bereitstellung einer primären Regelleistung in das Wechselspannungsnetz 6, wenn der Ladezustand des Batteriespeichers 2 im Bereich einer oberen Triggerschwelle liegt. Die Fig. 2 zeigt zwei Darstellungen. In der oberen Darstellung ist auf der Abszissenachse die Zeit t in Sekunden [s] und auf der Ordinatenachse eine Leistung P in Megawatt [MW] aufgetragen. Die untere Darstellung zeigt auf der Abszissenachse ebenfalls die Zeit t in Sekunden [s] und auf der Ordinatenachse einen Füllstand des Batteriespeichers 2 und eine Triggerschwelle in % der Kapazität des Batteriespeichers 2.

Der oberen Darstellung der Fig. 2 ist der Verlauf der angefragten primären Regelleistung 8 über die Zeit t zu entnehmen. Je nach Frequenzabweichung der Frequenz des Wechselspannungsnetzwerkes 6 von der Sollfrequenz ändert sich diese angefragte primäre Regelleistung 8. Gleichzeitig zeigt Fig. 2 eine Abgabeleistung 16 des Batteriespeichers 2. Die Abgabeleistung 16 ist die Leistung des Batteriespeichers, die für die Bereitstellung der primären Regelleistung und zwar sowohl für das Abgeben als auch für das Aufnehmen von Leistung bereitgestellt wird. Die physikalisch maximal mögliche Leistung des Batteriespeichers 2 ist größer oder gleich der Abgabeleistung 16. Im vorliegenden Beispiel beträgt die Abgabeleistung 16 des Batteriespeichers 2 60 MW.

Wie Fig. 2 zeigt, liegt für den Zeitraum zwischen 0 und 38 Sekunden die angefragte Regelleistung 8 konstant bei -60 MW, also bei der negativen Abgabeleistung 16. Es liegt also eine Überfrequenz im Wechselspannungsnetz 6 vor. Weiterhin ist der oberen Darstellung von Fig. 2 die durch das Kombinationskraftwerk 1 tatsächlich bereitgestellte primäre Regelleistung 9 zu entnehmen. Diese zeigt Abweichungen von der angefragten primären Regelleistung 8, gleicht sich jedoch immer auf Zeitskalen von weniger als 30 s an die angefragte primäre Regelleistung 8 an.

Weiterhin zeigt die obere Darstellung von Fig. 2 die Leistungsbereitstellung 10 des Batteriespeichers 2 und die Leistungsbereitstellung 11 des Windparks 5. Die untere Darstellung von Fig. 2 zeigt eine obere Triggerschwelle 12 des Batteriespeichers 2, die in diesem Beispiel bei 98% der Kapazität des Batteriespeichers 2 liegt. Die obere Triggerschwelle 12 wird in Abhängigkeit der Reaktionsgeschwindigkeit des mindestens einen Kraftwerks, hier des Pumpspeicherkraftwerks 3 und/oder des Windparks 4, des Kombinationskraftwerks 1 festgelegt. Gleichzeitig zeigt die untere Darstellung von Fig. 2 die zeitliche Entwicklung des Ladezustandes 13 des Batteriespeichers 2. Dieser entwickelt sich zeitlich und steigt zwischen 0 und 25 s an, wobei er bei zwischen 6 s und 8 s die obere Triggerschwelle 12 erreicht. Der Zeitpunkt des Überschreitens der oberen Triggerschwelle 12 wird als oberer Triggerzeitpunkt 18 bezeichnet.

Beim Überschreiten der oberen Triggerschwelle 12 durch den Ladezustand 13 wird eine Reduktion der Leistungsbereitstellung 11 des Windparks 5 initiiert. Aufgrund der mechanischen Trägheit der Windkraftanlagen 4 dauert es einige Sekunden, bis sich die Leistungsbereitstellung 11 reduziert, dies ist bei 12 s und damit 5 s nach Überschreiten der oberen Triggerschwelle 12 der Fall. Die Leistungsbereitstellung 11 des Windparks 5 wird dabei von 100 MW, die zwischen 0 s und 10 s anlagen bis auf 40 MW bei einer Zeit von 26 s reduziert. Die vom Windpark 5 abgegebene Leistung sinkt also kontinuierlich um 60 MW. Entsprechend wird die Leistungsbereitstellung 10 des Batteriespeichers 2 entsprechend erhöht, also weniger Leistung zum Laden des Batteriespeichers 2 eingesetzt. So steigt die Leistungsbereitstellung 10 des Batteriespeichers von -60 MW im Bereich von 0 bis 10 s kontinuierlich auf 0 MW zum Zeitpunkt 26 s an. Zu diesem Zeitpunkt ist ein Ladezustand 13 des Batteriespeichers 2 erreicht, hier 99,5 % der Kapazität des Batteriespeichers 2, der zunächst konstant bleibt, da die Leistungsbereitstellung 10 des Batteriespeichers 2 bis zum Zeitpunkt 38 s bei null liegt, also weder Leistung aus dem Batteriespeicher 2 abgegeben noch von diesem während eines Ladevorgangs aufgenommen wird.

Zwischen einer Zeit von 38 s und 40 s steigt die angefragte primäre Regelleistung 8 von -60 MW auf 60 MW, so dass nunmehr eine Unterfrequenz im Wechselspannungsnetz 6 vorliegt. Dies führt zu einem umgehenden Anstieg der abgegebenen Leistung in der Leistungsbereitstellung 10 des Batteriespeichers 2 auf die Abgabeleistung 16 von 60 MW (siehe oben). Gleichzeitig beginnt der Ladezustand 13 des Batteriespeichers 2 abzusinken, bis er bei einer Zeit von 50 s die obere Triggerschwelle 12 erreicht und ab 52 s unter der oberen Triggerschwelle 12 liegt. Zu diesem Zeitpunkt wird die Leistungsbereitstellung 11 des Windparks 5 wieder kontinuierlich erhöht, so dass ab einer Zeit von 64 s die abgegebene primäre Regelleistung 9 der angefragten primären Regelleistung 8 entspricht.

Fig. 3 zeigt ein weiteres Beispiel einer Bereitstellung einer primären Regelleistung in das Wechselspannungsnetz 6, wenn der Ladezustand des Batteriespeichers 2 im Bereich einer unteren Triggerschwelle liegt. Die Fig. 3 zeigt ebenso wie Fig. 2 zwei Darstellungen. In der oberen Darstellung ist auf der Abszissenachse die Zeit t in Sekunden [s] und auf der Ordinatenachse eine Leistung P in Megawatt [MW] aufgetragen. Die untere Darstellung zeigt auf der Abszissenachse ebenfalls die Zeit t in Sekunden [s] und auf der Ordinatenachse einen Füllstand des Batteriespeichers 2 und eine Triggerschwelle in % der Kapazität des Batteriespeichers 2.

Im Unterschied zum in Fig. 2 gezeigten Beispiel bewegt sich hier der Ladezustand 13 des Batteriespeichers im Bereich einer unteren Triggerschwelle 14 (vgl. die untere Darstellung). Die untere Triggerschwelle 14 liegt in diesem Beispiel bei 15% der Kapazität des Batteriespeichers 2. Wie die obere Darstellung der Fig. 3 zeigt, wird bis zu einem Zeitpunkt von 140 s die bereitgestellte Primärleistung 9 ausschließlich über die Leistungsbereitstellung 10 des Batteriespeichers 2 erbracht. Sowohl die Leistungsbereitstellung 10 des Batteriespeichers 2 als auch die angefragte primäre Regelleistung 8 und die bereitgestellte primäre Regelleistung 9 liegen bei 60 MW, also der Abgabeleistung 16 des Batteriespeichers 2. Eine Leistungsbereitstellung 16 des Pumpspeicherkraftwerks 3 liegt bei 0 MW. Zum Zeitpunkt 20 s unterschreitet der Ladezustand 13 des Batteriespeichers 2 die untere Triggerschwelle 14 (siehe untere Darstellung der Fig. 3). Der Zeitpunkt des Unterschreitens der unteren Triggerschwelle 14 wird als unterer Triggerzeitpunkt 17 bezeichnet.

Das Unterschreiten der unteren Triggerschwelle 14 löst ein Anfahren des Pumpspeicherkraftwerks 3 aus, welches ca. 120 s benötigt, um Leistung abgeben zu können, wie die Leistungsbereitstellung 15 des Pumpspeicherkraftwerks 3 (siehe obere Darstellung) zeigt. Ab einem Zeitpunkt von 142 s erhöht sich die Leistungsbereitstellung 15 des Pumpspeicherkraftwerks 3 kontinuierlich, bis sie bei 152 s einen Maximalwert von 60 MW erreicht. Entsprechend wird die Leistungsbereitstellung 10 des Batteriespeichers 2 abgesenkt, bis diese bei 152 s 0 MW erreicht.

Auf einen Abfall in der angefragten primären Regelleistung 8 zwischen 158 s und 160 s auf -60 MW wird durch ein Absenken der Leistungsbereitstellung 15 des Pumpspeicherkraftwerks 3 reagiert. Gleichzeitig werden 60 MW Leistung zur Ladung des Batteriespeichers 2 genutzt, wie die Leistungsbereitstellung 10 des Batteriespeichers 2 (oben) und der Ladezustand 13 des Batteriespeichers 2 zeigen. Dies entspricht der Abgabeleistung 16 des Batteriespeichers 2. Bei dem gezeigten Verlauf handelt es sich um eine exemplarische Abfahrrampe. Sie ist für jedes Kraftwerk individuell und kann, muss aber nicht stetig verlaufen.

Wie sich aus den Fig. 2 und 3 ergibt, stellt das Kombinationskraftwerk 1 grundsätzlich primäre Regelleistung 9 aus dem Batteriespeicher 2 bereit. Wenn der Ladezustand 13 des Batteriespeichers 2 die obere Triggerschwelle 12 übersteigt, wird die Leistungsabgabe mindestens einer Windkraftanlage 4 im Windpark 5 reduziert, um trotz eines nahezu voll geladenen Batteriespeichers 2 primäre Regelleistung 9 bereitstellen zu können. Unterschreitet der Ladezustand 13 des Batteriespeichers 2 die untere Triggerschwelle 14, so wird die Leistungsbereitstellung 15 des Pumpspeicherkraftwerks 3 erhöht, dieses wird angefahren, um entsprechend Leistung als primäre Regelleistung 9 bereitzustellen, wenn sich der Ladezustand 13 des Batteriespeichers 2 unterhalb der unteren Triggerschwelle 14 in Richtung null bewegt. In diesem Beispiel wird darauf abgestellt, dass bei einer negativen Regelleistung diese aus dem Windpark 5 zur Verfügung gestellt wird, während eine positive Regelleistung durch ein Pumpspeicherkraftwerk 3 bereit gestellt wird. Auch der Einsatz anderer Kraftwerke wie oben dargelegt ist vorteilhaft möglich. Bevorzugt kann auch ein und dasselbe Kraftwerk zur Bereitstellung sowohl positiver als auch negativer Regelleistung eingesetzt werden.

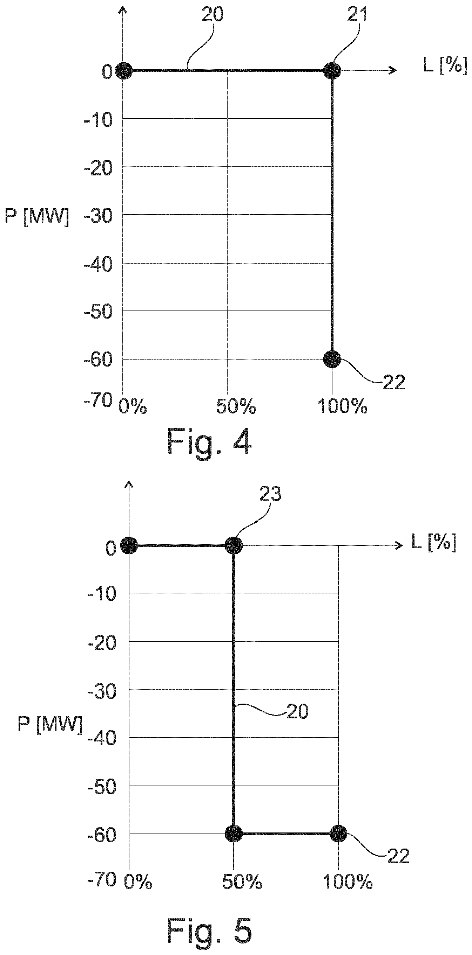

Fig. 4 und 5 zeigen schematisch asymmetrische obere Triggerschwellen beim Einsatzbeginn (Fig. 4) und beim Einsatzende (Fig. 5) eines Kraftwerks zur Bereitstellung einer negativen Regelleistung. Fig. 4 und 5 zeigen dabei auf der Abszissenachse den Ladezustand L des Batteriespeichers 2 in % des maximalen Füllstandes des Batteriespeichers. 100% entspricht also einem vollständig geladenen Batteriespeicher 2, während 0 % einem vollständig entladenen Batteriespeicher 2 entspricht. Auf der Ordinatenachse wird Leistungsbereitstellung 11 des Kraftwerks, in diesem Beispiel eines Windparks aus einer oder mehr Windkraftanlagen, als Leistung P in Megawatt aufgetragen.

In Fig. 4 ist die Leistungsbereitstellung 20 des Kraftwerks, hier eines Windparks mit mindestens einer Windkraftanlage, in Abhängigkeit vom Ladezustand des Batteriespeichers 2 gezeigt. Die negative bereitgestellte Regelleistung 9 wird vollständig aus dem Batteriespeicher 2 bereitgestellt, solange ein Ladezustand des Batteriespeichers unterhalb einer ersten oberen Triggerschwelle 21 liegt, die in diesem Beispiel mit 98% des maximalen Ladezustands des Batteriespeichers 2 vorgegeben ist. Beim Überschreiten dieser ersten oberen Triggerschwelle 21 von kleineren Werten des Ladezustands 5 wird dann das Kraftwerk, hier der Windpark, mit der entsprechenden negativen Leistungsbereitstellung 22 von hier 60 MW betrieben, um so die angefragte Regelleistung 8 von -60 MW bereitzustellen. Eine weitere Bereitstellung von Leistung aus dem Batteriespeicher 2 erfolgt dann nicht mehr.

Fig. 5 zeigt das Beispiel einer Beendigung einer Leistungsbereitstellung 20 aus einem Kraftwerk wie hier dem Windpark. Die Leistungsbereitstellung 20 wird nicht dann von -60 MW auf 0 reduziert, wenn die erste obere Triggerschwelle 22 (vgl. Fig. 4) des Ladezustands des Batteriespeichers 2 unterschritten wird. Vielmehr wird erst dann die Leistungsbereitstellung 20 des Kraftwerks beendet, wenn der Ladezustand des Batteriespeichers 2 eine zweite obere Triggerschwelle 23, hier 50% der maximalen Ladung oder des maximalen Füllstandes des Batteriespeichers 2, unterschreitet. Dabei unterscheidet sich die zweite obere Triggerschwelle 23 deutlich von der ersten oberen Triggerschwelle 21. Dies ist vorteilhaft im Vergleich zu einer einzigen oberen Triggerschwelle 12, da es im Falle einer einzigen oberen Triggerschwelle 12 dazu kommen kann, dass bei kurzzeitigen Schwankungen des Ladezustands um die obere Triggerschwelle 12 mit kleiner Amplitude die Leistungsbereitstellung 11 des Kraftwerks immer wieder begonnen und beendet wird. Dies erhöht den Verschleiß des Kraftwerks.

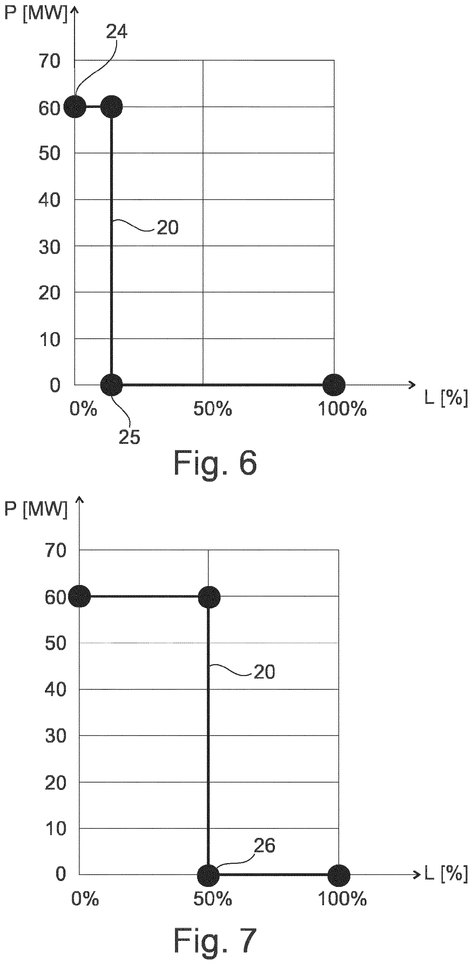

Fig. 6 und 7 zeigen schematisch asymmetrische untere Triggerschwellen beim Einsatzbeginn (Fig. 6) und beim Einsatzende (Fig. 7) eines Kraftwerks zur Bereitstellung einer positiven Regelleistung. Fig. 6 und 7 zeigen dabei auf der Abszissenachse den Ladezustand L des Batteriespeichers 2 in % des maximalen Füllstandes des Batteriespeichers. 100% entspricht also einem vollständig geladenen Batteriespeicher 2, während 0 % einem vollständig entladenen Batteriespeicher 2 entspricht. Auf der Ordinatenachse wird Leistungsbereitstellung 11 des Kraftwerks, in diesem Beispiel eines Pumpspeicherkraftwerks, als Leistung P in Megawatt aufgetragen.

Fig. 6 zeigt die Leistungsbereitstellung 20 des Kraftwerks in Abhängigkeit vom Ladezustand L des Batteriespeichers 2. Hier wird der Einsatzbeginn des Kraftwerks zur Bereitstellung der Regelleistung beschrieben. Das Kraftwerk ist in diesem Beispiel ein Pumpspeicherkraftwerk Dieses gibt eine Leistung 24 in Höhe von 60 MW ab, wenn der Ladezustand des Batteriespeichers eine erste untere Triggerschwelle 25 von größeren Werten kommend unterschreitet. Die erste untere Triggerschwelle 25 liegt in diesem Beispiel bei 15%.

Fig. 7 zeigt das Einsatzende des Kraftwerks, hier eines Pumpspeicherkraftwerks, zur Bereitstellung einer Regelleistung. Die Leistungsbereitstellung 20 des Kraftwerks ist gegen den Ladezustand L des Batteriespeichers aufgetragen. So lange der Ladezustand L des Batteriespeichers unterhalb der zweiten unteren Triggerschwelle 26 liegt, stellt das Kraftwerk eine Leistung 24 in Höhe von 60 MW ab. Überschreitet der Ladezustand L die zweite untere Triggerschwelle 26, so wird die Leistungsbereitstellung 20 des Kraftwerks beendet. In diesem Beispiel liegt die zweite untere Triggerschwelle 26 bei 50% und unterscheidet sich damit deutlich von der ersten untere Triggerschwelle 25. So werden bei einer einzigen (symmetrischen) unteren Triggerschwelle 14 mögliche Fluktuationen, die zu einem oft wiederholten Zu- und Abschalten des Kraftwerks führen würden, vermieden.

Ein Kombinationskraftwerk 1 umfassend mindestens einen Batteriespeicher 2 und mindestens ein Kraftwerk wie beispielsweise ein Pumpspeicherkraftwerk 3 stellt grundsätzlich primäre Regelleistung 9 aus dem Batteriespeicher 2 bereit. Unterschreitet der Ladezustand 13 des Batteriespeichers 2 die untere Triggerschwelle 14, so wird die Leistungsbereitstellung 15 des Pumpspeicherkraftwerks 3 erhöht, dieses wird angefahren, um entsprechend Leistung als primäre Regelleistung 9 bereitzustellen, wenn sich der Ladezustand 13 des Batteriespeichers 2 unterhalb der unteren Triggerschwelle 14 in Richtung null bewegt. Analog lässt sich eine obere Triggerschwelle 12 des Batteriespeichers 2 realisieren.

### Bezugszeichen

- 1: Kombinationskraftwerk
- 2: Batteriespeicher
- 3: Pumpspeicherkraftwerk
- 4: Windkraftanlage
- 5: Windpark
- 6: Wechselspannungsnetz
- 7: Steuereinheit
- 8: angefragte primäre Regelleistung
- 9: bereitgestellte primäre Regelleistung
- 10: Leistungsbereitstellung des Batteriespeichers
- 11: Leistungsbereitstellung des Windparks
- 12: obere Triggerschwelle
- 13: Ladezustand des Batteriespeichers
- 14: untere Triggerschwelle
- 15: Leistungsbereitstellung des Pumpspeicherkraftwerks
- 16: Abgabeleistung des Batteriespeichers
- 17: unterer Triggerzeitpunkt
- 18: oberer Triggerzeitpunkt
- 19: Netzanschlusspunkt
- 20: Leistungsbereitstellung des Kraftwerks
- 21: erste obere Triggerschwelle
- 22: Leistung des Kraftwerks
- 23: zweite obere Triggerschwelle
- 24: Leistung des Kraftwerks
- 25: erste untere Triggerschwelle
- 26: zweite untere Triggerschwelle

## Patentansprüche

1. Verfahren zum Bereitstellen einer Regelleistung (9) zum Regeln der Frequenz in einem Wechselspannungsnetz (6) mit einer Sollfrequenz, bei dem die Regelleistung (9) aus einem Kombinationskraftwerk (1) bereitgestellt wird, welches einen Batteriespeicher (2) und mindestens ein Kraftwerk (3) umfasst, bei dem für den Ladezustand (13) des Batteriespeichers (2) eine untere Triggerschwelle (14) festgelegt ist, umfassend die folgenden Schritte:
a) Bestimmen einer Frequenzabweichung durch Bildung einer Differenz zwischen der Frequenz und der Sollfrequenz des Wechselspannungsnetzes (6);
b) Bestimmung des Ladezustandes (13) des Batteriespeichers (2) und Vergleich des Ladezustandes (13) mit der unteren Triggerschwelle (14);
c) Bereitstellen der sich aus der Frequenzabweichung ergebenden Regelleistung (9), wobei in Schritt c) die Regelleistung (9) grundsätzlich aus dem Batteriespeicher (2) zur Verfügung gestellt wird, wobei wenn der Ladezustand (13) des Batteriespeichers (2) zu einem unteren Triggerzeitpunkt (17) unter die untere Triggerschwelle (14) fällt eine Leistungsbereitstellung (15) mindestens eines Kraftwerks (3) initiiert wird, wobei die Leistungsbereitstellung (13) des Batteriespeichers (2) entsprechend der Leistungsbereitstellung (15) des mindestens einen Kraftwerks (3) reduziert wird.

2. Verfahren nach Anspruch 1, bei dem der Batteriespeicher (2) eine Abgabeleistung (16) aufweist, wobei die Abgabeleistung (16) die Leistung ist, die aus dem Batteriespeicher (2) maximal für die Bereitstellung der primären Regelleistung (9) zur Verfügung steht, wobei die untere Triggerschwelle (14) so festgelegt wird, dass der Batteriespeicher (2) bei Erreichen der unteren Triggerschwelle (14) noch einen genügend hohen Ladezustand (13) aufweist, dass ab dem unteren Triggerzeitpunkt (17) bis zur Abgabe der Abgabeleistung (16) durch das mindestens eine Kraftwerk (3) der Batteriespeicher (2) noch die Abgabeleistung (16) abgeben kann.

3. Verfahren nach einem der vorhergehenden Ansprüche, bei dem der Batteriespeicher (2) und das mindestens eine Kraftwerk (3) über unterschiedliche Netzanschlusspunkte (19) mit dem Wechselspannungsnetz (6) verbunden sind.

4. Verfahren nach einem der vorhergehenden Ansprüche, bei dem der Batteriespeicher (2) eine Abgabeleistung (16) aufweist, wobei die maximale durch das Kraftwerk (3) abgebbare Leistung mindestens der Abgabeleistung (16) entspricht.

5. Verfahren nach einem der vorhergehenden Ansprüche, bei dem für den Ladezustand (13) des Batteriespeichers (2) eine obere Triggerschwelle (12) festgelegt wird und in Schritt b) weiterhin ein Vergleich des Ladezustandes (13) des Batteriespeichers (2) mit der oberen Triggerschwelle (12) erfolgt und, wenn der Ladezustand (13) des Batteriespeichers die obere Triggerschwelle (12) zu einem oberen Triggerzeitpunkt (18) übersteigt, eine Reduktion einer Leistungsbereitstellung (11) mindestens eines Kraftwerks (4) initiiert wird, wobei die Leistungsbereitstellung (10) des Batteriespeichers entsprechend der Reduktion der Leistungsbereitstellung (10) des mindestens einen Kraftwerks (4) erhöht wird.

6. Verfahren nach Anspruch 5, bei dem der Batteriespeicher (2) eine Kapazität und eine Abgabeleistung (16) aufweist, wobei die Abgabeleistung (16) die Leistung ist, die aus dem Batteriespeicher (2) maximal für die Bereitstellung der Regelleistung (9) zur Verfügung steht, wobei die obere Triggerschwelle (12) so festgelegt wird, dass die Differenz zwischen der Kapazität des Batteriespeichers (2) und der oberen Triggerschwelle (12) ausreicht, um die erhöhte Leistungsbereitstellung (10) des Batteriespeichers (2) ausgehend von einer Situation, in der die Leistungsbereitstellung (10) des Batteriespeichers (2) beim oberen Triggerzeitpunkt (18) bei der negativen Abgabeleistung (16) liegt, bis zu einer Situation, bei der in Abhängigkeit von der Reduktion der Leistungsbereitstellung (11) des mindestens einen Kraftwerks (4) die Leistungsbereitstellung (10) des Batteriespeichers (2) null erreicht, noch im Batteriespeicher (2) gespeichert ist.

7. Verfahren nach einem der vorhergehenden Ansprüche, bei dem der Batteriespeicher (2) über einen Netzanschlusspunkt (19) mit dem Wechselspannungsnetz verbunden (6) ist und in Schritt a) die Frequenz des Wechselspannungsnetzwerks (6) am Netzanschlusspunkt (19) des Batteriespeichers (2) bestimmt wird.

8. Verfahren nach einem der vorhergehenden Ansprüche, bei dem nachdem die Leistungsbereitstellung des Kraftwerks bei Unterschreiten einer ersten unteren Triggerschwelle initiiert wurde, die Leistungsbereitstellung des Kraftwerks beendet wird, wenn der Ladezustand des Batteriespeichers eine zweite untere Triggerschwelle überschreitet, wobei sich die erste untere Triggerschwelle von der zweiten unteren Triggerschwelle unterscheidet.

9. Verfahren nach einem der Ansprüche 5 bis 8, bei dem nachdem die Reduktion der Leistungsbereitstellung des Kraftwerks bei Überschreiten einer ersten oberen Triggerschwelle (21) initiiert wurde, die Leistungsbereitstellung des Kraftwerks erhöht wird, wenn der Ladezustand (13) des Batteriespeichers unter eine zweite obere Triggerschwelle (23) fällt, wobei sich die erste obere Triggerschwelle von der zweiten oberen Triggerschwelle unterscheidet.
